# EUROPÄISCHE PATENTANMELDUNG

(11) **EP 1 652 492 A1**
(43) Veröffentlichungstag der Anmeldung: **03.05.2006**
(21) Anmeldenummer: 05023671.0
(22) Anmeldetag: 28.10.2005
(51) Int. Cl.: A61C 13/16, A61C 13/00, A61C 13/08, A61C 13/20

(54) **Zahnformelement, Basiselement und Verfahren zum Herstellen eines künstlichen Zahnes**

(30) Priorität: 28.10.2004 DE 102004052393
(71) Anmelder: Chan, Robert, 86150 Augsburg (DE)
(72) Erfinder: Chan, Robert, 86150 Augsburg (DE)
(74) Vertreter: Weiss, Manfred Erwin

(57) **Zusammenfassung**

Mindestens ein Zahnformelement ist ausgebildet zum Lichthärten von lichthärtbarem Material in dem Zahnformelement. Dem Zahnformelement kann mindestens ein Basiselement zugeordnet sein, beispielsweise zum mechanischen Stützen des Zahnformelements. Das Basiselement kann eine Lichtquelle und/oder eine Lichtleiterkupplung aufweisen.

## Beschreibung

Die Erfindung liegt auf dem Gebiet der Zahntechnik und Prothetik und betrifft die Herstellung eines künstlichen Zahnes, beispielsweise in Form einer Krone, einer Brücke, eines Implantats oder einer herausnehmbaren Prothese.

Aus der Praxis ist es bekannt, einen künstlichen Zahn herzustellen, der aus einem Zahnrohling besteht, auf den von Hand weitere Schichten eines lichthärtbaren Materials mit einem Pinsel aufgetragen werden, zur Erzeugung einer optischen Anmutung, die einem natürlichen Zahn entspricht.

Durch die Erfindung soll die Aufgabe gelöst werden, Mittel zur Herstellung eines künstlichen Zahnes bereitzustellen, die es ermöglichen, auf einfache und kostengünstige Weise einen natürlich aussehenden, künstlichen Zahn zu schaffen.

Diese Aufgabe wird gelöst durch die Merkmale der unabhängigen Ansprüche.

Weitere Merkmale der Erfindung sind in den abhängigen Ansprüchen enthalten.

Die Erfindung ermöglicht die Herstellung eines künstlichen Zahnes aus lichthärtbarem Material, welches üblicherweise eine höhere Qualität und Belastbarkeit als chemisch härtbares Material aufweist. Chemisch härtendes Material wird zum Beispiel in bekannter Weise für die Herstellung von Provisorien eingesetzt.

Ein wesentlicher Kerngedanke der Erfindung ist die Verwendung von lichthärtbarem Material in einer Form, welche das Härten des lichthärtbaren Materials in der Form ermöglicht.

Die Erfindung betrifft insbesondere die Verwendung eines an sich bekannten lichthärtbaren Materials in einer Zahnform oder in einem Verfahren wie sie in den Ansprüchen definiert sind.

Das Herstellen eines künstlichen Zahnes gemäß der Erfindung umfasst das Herstellen eines künstlichen Zahnes in jeder Form. Beispielsweise umfasst das Herstellen eines künstlichen Zahnes gemäß der Erfindung auch die Verblendung eines Zahnrohlings. Zahnrohling umfasst hierbei auch ein bekanntes Zahngerüst. Beispielsweise umfasst die Erfindung die Verblendung eines Zahnrohlings oder eines Zahngerüstes einer Prothese oder einer Krone. Der Zahnrohling bzw. das Zahngerüst kann beispielsweise aus lichthärtbarem Material oder aus Metall oder aus jedem anderen geeigneten Material, insbesondere Dentalmaterial gebildet sein. Der künstliche Zahn kann als festsitzender künstlicher Zahn, z. B. als Krone, Brücke oder Implantat, oder als herausnehmbarer künstlicher Zahn, z. B. als Prothese ausgebildet sein.

Gemäß der Erfindung wird ein Zahnformelement zum Herstellen von mindestens einem künstlichen Zahn aus lichthärtbarem Material bereitgestellt, wobei das Zahnformelement ausgebildet ist zum Härten des lichthärtbaren Materials in dem Zahnformelement. Dadurch ist es möglich, das lichthärtbare Material, welches zum Bilden des künstlichen Zahnes vorgesehen ist, in dem Zahnformelement durch Bestrahlung mit geeignetem Licht zu härten.

Eine Zahnform kann eines oder mehrere Zahnformelemente enthalten. Die Zahnformelemente können beispielsweise durch Abformen eines Zahnes oder mehrerer Zähne eines Gebisses (natürliches Gebiss einer Person oder Modellgebiss) hergestellt sein.

Alternativ kann das Zahnformelement als Universalform ausgebildet sein, welche nicht einem bestimmten Gebiss angepasst ist, zur Herstellung eines "Normzahnes". In diesem Fall kann das Zahnformelement bereits in einer endgültigen Formgebung und Materialbeschaffenheit vertrieben werden, sodass ein künstlicher Zahn ohne weite Anpassung des Zahnformelementes in dem Zahnformelement gebildet werden kann.

In einer alternativen Ausführungsform ist das Zahnformelement plastisch verformbar, sodass mindestens ein Zahn eines bestimmten Gebisses mit dem Zahnformelement abformbar ist. Durch Abformen des mindestens einen Zahnes wird in dem Zahnformelement eine Ausnehmung gebildet, in welche das lichthärtbare Material, durch welches der künstliche Zahn gebildet werden soll, einbringbar ist. Im Rahmen der Offenbarung der Erfindung bezeichnet "Ausnehmung" stets mindestens einen Teil einer Ausnehmung, die dem zu bildenden mindestens einen künstlichen Zahn entspricht.

Es kann vorgesehen sein, dass das Zahnformelement selbst härtbar ist, beispielsweise lichthärtbar ist oder chemisch härtbar ist. Insbesondere kann vorgesehen sein, dass das plastisch verformbare Zahnformelement, mit welchem der mindestens eine Zahn abgeformt wurde, durch Einwirkung von Umgebungsluft härtbar ist. "Härten" des Zahnformelementes umfasst in diesem Zusammenhang jede Art der Änderung der Materialeigenschaft und kann auch Verfestigen bzw. Vernetzen umfassen. Beispielsweise kann das Zahnformelement aus klarem Silikon gebildet sein, welches durch Lufteinwirkung in seinen endgültigen elastischen Zustand überführbar ist.

Während klares Silikon in seinem ausgehärteten Zustand noch eine gewisse Elastizität aufweist, kann das Zahnformelement auch aus einem Material gebildet sein oder ein Material enthalten, welches nach dem Aushärten eine sehr hohe Steifigkeit und keine oder eine sehr geringe Elastizität mehr aufweist. Eine gewisse Elastizität des Zahnformelementes ist jedoch von Vorteil, da in diesem Fall der in der Ausnehmung des Zahnformelementes gebildete mindestens eine künstliche Zahn leichter aus dem Zahnformelement herausnehmbar bzw. entfernbar ist.

Das Zahnformelement kann mindestens einen Kanal oder mindestens einen Teil von mindestens einem Kanal zwischen der Ausnehmung und einer äußeren Oberfläche des Zahnformelementes aufweisen, beispielsweise zum Einbringen eines lichthärtbaren Materials in die Ausnehmung. Beispielsweise kann vorgesehen sein, dass das Zahnformelement einen Längsabschnitt oder einen Umfangsabschnitt eines Kanals oder mehrerer Kanäle aufweist. Der Kanal kann beispielsweise zum Befüllen der Ausnehmung mit lichthärtbarem Material vorgesehen sein. Alternativ oder zusätzlich kann ein Kanal vorgesehen sein, welcher als Überlauf wirkt, sodass zu viel in die Ausnehmung eingebrachtes lichthärtbares Material durch diesen, als Überlauf wirkenden Kanal, wieder austritt. Durch den Überlauf wird ein übermäßiger Druck des lichthärtbaren Materials auf das Zahnformelement vermieden. Dadurch wird ein sehr formgetreuer künstlicher Zahn herstellbar. Ferner kann durch den Überlauf die Bildung von Luftblasen in der Ausnehmung vermieden werden.

Das Zahnformelement ist vorzugsweise mindestens teilweise aus einem lichtdurchlässigen Material gebildet. Das lichtdurchlässige Material ist insbesondere für Härtelicht, welches zum Lichthärten eines lichthärtbaren Materials geeignet ist, durchlässig. Der Wellenlängenbereich, für welchen das lichtdurchlässige Material durchlässig ist, bzw. die Wahl des lichtdurchlässigen Materials kann hierbei abhängig von dem verwendeten lichthärtbaren Material ausgewählt sein. Beispielsweise kann vorgesehen sein, dass das lichthärtbare Material mindestens für UV-Licht durchlässig ist, und dass das lichthärtbare Material durch UV-Licht härtbar ist. Vorzugsweise ist das lichtdurchlässige Material für einen großen Wellenlängenbereich lichtdurchlässig, sodass das Zahnformelement für eine Vielzahl von lichthärtbaren Materialien, die jeweils durch Licht aus einem anderen Wellenlängenbereich härtbar sind, geeignet ist.

Ein Material, welches die Anforderungen an ein Material für das Zahnformelement gut erfüllt, ist beispielsweise klares Silikon.

Das Zahnformelement kann ein Positioniermittel aufweisen, durch welches das Zahnformelement bezüglich eines weiteren Zahnformelements definiert positionierbar ist. Beispielsweise kann das Positioniermittel durch eine oder mehrere Erhebungen auf dem einen Zahnformelement gebildet sein, welche mit entsprechenden Vertiefungen auf dem weiteren Zahnformelement zusammenpassen. Andere Arten von Positioniermitteln sind ebenso möglich, beispielsweise können optische Positioniermittel z. B. in Form von Markierungen oder Kerben vorgesehen sein, welche dem Benutzer einen Hinweis auf eine korrekte Positionierung geben.

Das Positioniermittel definiert die relative Position der Zahnformelemente, vorzugsweise in einer Raumrichtung, beispielsweise in mindestens einer vertikalen und/oder horizontalen Richtung und/oder bezüglich einer Verdrehung.

Das Material, aus welchem das Zahnformelement gebildet ist, kann ein Dentalmaterial sein, oder jedes andere Material, welches für eine Verwendung gemäß der Erfindung geeignet ist. Das Material für das Zahnformelement ist vorzugsweise lichtdurchlässig.

Die Lichtdurchlässigkeit des Zahnformelementes kann in alle Raumrichtungen homogen ausgebildet sein. Alternativ kann vorgesehen sein, dass das Zahnformelement in einer bestimmten Raumrichtung lichtdurchlässiger als in einer hiervon abweichenden Raumrichtung ist. Beispielsweise kann vorgesehen sein, dass das Zahnformelement senkrecht zu einer Oberfläche der Ausnehmung, in welcher der mindestens eine Zahn gebildet wird, eine höhere Lichtdurchlässigkeit aufweist, als in einer Richtung parallel zu der Oberfläche der Ausnehmung.

Ferner kann vorgesehen sein, dass die Lichtdurchlässigkeit des Zahnformelements durch entsprechende Materialbehandlung gezielt eingeschränkt ist. Beispielsweise kann vorgesehen sein, dass das Zahnformelement auf seiner der Ausnehmung abgewandten äußeren Oberfläche verspiegelt ist.

Die Zahnform kann eines oder mehrere Basiselemente enthalten.

Einem Zahnformelement kann ein einziges Basiselement zugeordnet sein. Alternativ können einem Zahnformelement mehrere, d. h. mindestens zwei Basiselemente zugeordnet sein. Ferner können jedem Basiselement mehrere, d. h. mindestens zwei Zahnformelemente zugeordnet sein.

Ein erfindungsgemäßes Basiselement weist eine Wandung mit einer Innenseite und einer Außenseite auf, wobei das mindestens eine, dem Basiselement zugeordnete Zahnformelement auf der Innenseite angeordnet ist. Das Basiselement ist zum Bereitstellen von Licht auf der Innenseite der Wandung ausgebildet, zum Härten des lichthärtbaren Materials in dem Zahnformelement.

Licht im Sinne dieser Offenbarung der Erfindung ist ein Licht, welches zum Lichthärten des lichthärtbaren Materials geeignet ist, entsprechend den vorstehenden Ausführungen zu dem Zahnformmaterial. Es versteht sich, dass, selbst wenn das Basiselement wie auch das Zahnformelement aus lichtdurchlässigem Material gebildet sind, das lichtdurchlässige Basismaterial dennoch in der Regel von dem lichtdurchlässigen Zahnformmaterial verschieden ist, entsprechend ihrem unterschiedlichen Verwendungszweck und den sich hieraus ergebenden unterschiedlichen Anforderungen, insbesondere bezüglich Elastizität und Steifigkeit.

Ein Basiselement kann insbesondere eine erfindungsgemäße Weiterbildung eines dem Zahntechniker bekannten Löffels oder einer Küvette sein.

Gemäß der Erfindung kann das Bereitstellen von Licht auf der Innenseite der Wandung des Basiselements auf unterschiedliche Weise realisiert sein. Die im Rahmen dieser Offenbarung der Erfindung beschriebenen Realisierungsmöglichkeiten zum Bereitstellen von Licht auf der Innenseite der Wandung sind beliebig kombinierbar.

Beispielsweise kann vorgesehen sein, dass die Wandung mindestens teilweise für Licht durchlässig ist. Beispielsweise kann das Basiselement aus einem lichtdurchlässigen Material gebildet sein oder ein lichtdurchlässiges Material enthalten. Ferner kann die Wandung mindestens einen Durchbruch aufweisen, zum Durchtritt von Licht von der Außenseite zu der Innenseite der Wandung.

Das Basiselement kann gemäß einer Ausführungsform der Erfindung mindestens eine Lichtleiterkupplung aufweisen, welche mit einem Lichtleiter kuppelbar ist durch welche von dem Lichtleiter abgegebenes Licht auf die Innenseite der Wandung bringbar ist. Durch die externe Anordnung einer Lichtquelle und Übertragen von deren Licht durch einen Lichtleiter auf die Innenseite der Wandung des Basiselements, ist es möglich, die Lichtquelle entfernt von dem Basiselement anzuordnen. Auf diese Weise kann eine Verunreinigung der Lichtquelle durch die verwendeten Materialien, insbesondere durch das lichthärtbare Material, vermieden werden.

Alternativ oder zusätzlich kann das Basiselement auf der Innenseite der Wandung mindestens eine Lichtquelle aufweisen, von welcher Licht abgebbar ist. Auf diese Weise kann ein auf der Innenseite der Wandung angeordnetes Zahnformelement und das in dessen Ausnehmung enthaltene lichthärtbare Material auf einfache Weise und ohne zusätzliche Apparatur mit Licht beaufschlagt werden zur Härtung des lichthärtbaren Materials. Die Lichtquelle kann eines oder mehrere Leuchtmittel, beispielsweise Lampen, aufweisen.

Die Lichtquelle kann ein Schutzelement, beispielsweise ein Abdeckglas, aufweisen, welches sie vor Verschmutzung und/oder Beschädigung schützt. Das Schutzelement für die Lichtquelle kann beispielsweise in das Basiselement integriert sein.

Sofern Mittel vorgesehen sind, zum Einbringen von Licht auf die Innenseite der Wandung, z. B. Druckbrüche, Lichtleiterkupplung, Lichtquellen, kann die Wandung aus lichtundurchlässigem Material gebildet sein.

Die Wandung kann auf der Innenseite verspiegelte Innenabschnitte aufweisen, welche auf sie auftreffendes Licht auf die Innenseite zurückreflektieren. Beispielsweise kann vorgesehen sein, dass die gesamte Innenseite der Wandung verspiegelt ist, sodass Licht, welches beispielsweise von einer auf der Innenseite angeordneten Lichtquelle abgegeben wird, auf effektive Weise auf ein in einer Ausnehmung des Zahnformelementes angeordnetes lichthärtbares Material einwirkt.

Insbesondere kann eine teilweise oder vollständige Verspiegelung der Innenseite der Wandung so erfolgen, dass das auf der Innenseite der Wandung bereitgestellte Licht gleichmäßig auf das Zahnformelement und damit auf das lichthärtbare Material in der Ausnehmung des Zahnformelements einwirkt. Zu diesem Zweck kann auch die Form und/oder die Oberflächenbeschaffenheit der Innenseite der Wandung angepasst sein, um das bereitgestellte Licht gleichmäßig zu verteilen.

Das Basiselement kann ein Positioniermittel aufweisen, durch welches das Basiselement bezüglich eines weiteren Basiselements definiert positionierbar ist. Das Positioniermittel des Basiselements kann entsprechend dem Positioniermittel des oben beschriebenen Zahnformelements ausgebildet sein, beispielsweise durch Erhöhungen oder Vertiefungen.

Das Basiselement kann zur Aufnahme von einem Zahnformelement oder mehreren Zahnformelementen, beispielsweise zwei, drei, vier, fünf oder sechs Zahnformelementen sein. Die Anzahl der Zahnformelemente kann dem jeweiligen Einzelfall angepasst sein. Vorteilhaft ist es beispielsweise, für jedes Zahnformelement ein Basiselement vorzusehen, und die gesamte Zahnform durch zwei Zahnformelemente zu bilden, die jeweils von einem Basiselement getragen werden. Auf diese Weise sind nur wenige Einzelteile erforderlich, was die Handhabung erleichtert.

Es kann auch vorgesehen sein, dass die gesamte Zahnform von einem einzigen Zahnformelement gebildet wird. Dies birgt jedoch die Gefahr, dass das Zahnformelement zum Entnehmen des in ihm gebildeten Zahnes beschädigt wird. Vorzugsweise werden deshalb für eine Zahnform mindestens zwei Zahnformelemente vorgesehen, die durch von einander Trennen eine einfache Herausnahme des gebildeten künstlichen Zahnes bzw. der gebildeten künstlichen Zähne ermöglicht.

Das Basiselement ist vorzugsweise als mechanische Stütze für das mindestens eine Zahnformelement ausgebildet. Dies ist insbesondere dann erforderlich, wenn das Zahnformelement aus einem elastischen Material besteht oder ein solches enthält, welches sich unter Druckbelastung verformt. Mit einem mechanisch stützenden Basiselement kann auch bei einem elastischen Zahnformelement ein formgetreuer künstlicher Zahn gebildet werden, da das Basiselement, welches das Zahnformelement mechanisch stützt, ein Verformen des Zahnformelements verhindert.

Das Bereitstellen eines Zahnformelementes und/oder eines Basiselementes nach der Erfindung ermöglicht die Durchführung eines effizienten Verfahrens zum Herstellen von mindestens einem künstlichen Zahn, welches die folgenden Schritte aufweist:
1. Einbringen eines ersten lichthärtbaren Materials in eine dem mindestens einen Zahn entsprechende Ausnehmung, die durch mindestens ein Zahnformelement gebildet wird;
2. Beaufschlagen des lichthärtbaren Materials mit Licht zum Härten des lichthärtbaren Materials in der Ausnehmung.

Die Ausnehmung bildet die eigentliche Zahnform, in welcher der mindestens eine Zahn gebildet wird.

In die Ausnehmung kann vor oder nach dem Einbringen des lichthärtbaren Materials, jedoch vor dem Härten des lichthärtbaren Materials ein Zahnrohling oder ein Zahngerüst in die dem mindestens einen Zahn entsprechende Ausnehmung eingebracht werden. In diesem Fall erfolgt eine Verblendung des Zahnrohlings oder des Zahngerüsts mit dem lichthärtbaren Material. Durch das Härten des lichthärtbaren Materials mit Licht erfolgt eine sichere Verbindung des lichthärtbaren Materials mit dem Zahnrohling bzw. dem Zahngerüst. Der Zahnrohling bzw. das Zahngerüst kann vor dem Verblenden in üblicher Weise vorbehandelt werden, um eine sichere Haftung des lichthärtbaren Materials auf dem Zahnrohling bzw. dem Zahngerüst sicherzustellen. Eine Verblendung eines Zahnrohlings oder eines Zahngerüsts kann beispielsweise im Zuge der Herstellung einer Krone oder einer Prothese erfolgen.

Der Zahnrohling oder das Zahngerüst kann mit einem geeigneten Material in einem der Zahnformelemente fixiert werden, vorzugsweise in dem Zahnformelement, welches der Unterseite bzw. dem Zahnhals des Zahnrohlings oder des Zahngerüsts zugeordnet ist. Ein geeignetes Material zum Fixieren des Zahnrohlings bzw. des Zahngerüsts ist beispielsweise Gips. Durch das Fixieren des Zahnrohlings bzw. des Zahngerüsts ist ein definiertes Herstellen, z. B. schichtweises Aufbauen des künstlichen Zahnes möglich, insbesondere in Kombination mit einem Positioniermittel an den Zahnformelementen oder an den entsprechenden Basisteilen.

Das Einbringen des lichthärtbaren Materials in die Ausnehmung gemäß dem ersten Schritt des erfindungsgemäßen Verfahrens kann beispielsweise durch Injektion des lichthärtbaren Materials in die Ausnehmung erfolgen. Vorzugsweise wird die Ausnehmung durch mindestens zwei Zahnformelemente gebildet, die bei dieser Ausführungsform des Verfahrens vor dem Eindringen des lichthärtbaren Materials in die Ausnehmung zusammengefügt werden, zum Bilden der dem Zahn entsprechenden Ausnehmung.

Alternativ kann das Einbringen des lichthärtbaren Materials dadurch erfolgen, dass die Ausnehmung, welche dem zu bildenden Zahn entspricht, durch mindestens zwei Zahnformelemente gebildet ist, und dass vor dem Zusammenfügen der mindestens zwei Zahnformelemente das lichthärtbare Material in mindestens eines der Zahnformelemente eingebracht wird und dass anschließend die mindestens zwei Zahnformelemente zusammengefügt werden zum Ausfüllen der hierdurch gebildeten Ausnehmung durch das lichthärtbare Material.

Bei dieser Ausführungsform des erfindungsgemäßen Verfahrens wird vorzugsweise ein Überschuss an lichthärtbarem Material in mindestens eines der Zahnformelemente eingebracht und die mindestens zwei Zahnformelemente werden mit Druck zusammengefügt, sodass alle Hohlräume in der durch das Zusammenfügen gebildeten Ausnehmung ausgefüllt werden und überschüssiges Material aus der Ausnehmung herausgepresst wird. Besonders vorteilhaft ist das erfindungsgemäße Verfahren bei der Farbgebung des künstlichen Zahnes, wobei hierzu die folgenden Schritte ausgeführt werden:
3. Abtragen oder Abnehmen eines Teils des gehärteten lichthärtbaren Materials und dadurch Bilden eines Zahnrohlings;
4. Wieder Einbringen des Zahnrohlings und eines lichthärtbaren Materials in die dem Zahn entsprechende Ausnehmung;
5. Beaufschlagen des lichthärtbaren Materials mit Licht zum Härten des lichthärtbaren Materials.

Auf diese Weise kann der gemäß dem Stand der Technik erforderliche aufwändige Schritt des Bemalens des Zahnrohlings durch einfaches Einbringen eines entsprechenden lichthärtbaren Materials der entsprechenden Farbe in die von dem mindestens einen erfindungsgemäßen Zahnformelement gebildete Ausnehmung ersetzt werden. Der endgültige Zahn kann mit dem erfindungsgemäßen Verfahren aus nur zwei Schichten von lichthärtbarem Material gebildet werden. Beim Stand der Technik sind hierzu üblicherweise drei Schichten erforderlich, um ein vergleichbares Ergebnis zu erzielen.

Der Zeitgewinn des erfindungsgemäßen Verfahrens gegenüber bekannten Verfahren ist umso höher, je mehr künstliche Zähne gefertigt werden, da der Zeitaufwand für die Herstellung von mehreren Zähnen nur geringfügig größer ist als für die Herstellung eines einzigen Zahnes. Jedoch auch bei der Herstellung von nur einem einzigen Zahn ergibt sich gegenüber dem von Hand bemalten Zahn bereits ein erheblicher Zeitgewinn.

Durch die einfache Herstellbarkeit ist es möglich, kostengünstig auch für einen hinteren Bereich eines Gebisses, wo bisher aus Kostengründen häufig eingeschliffene Normzähne verwendet wurden, individuelle Zähne herzustellen.

Im Folgenden wird die Erfindung mit Bezug auf die Zeichnungen beispielhaft anhand von bevorzugten Ausführungsformen beschrieben.

Die vorstehenden Ausführungen gelten uneingeschränkt auch für die nachfolgende Beschreibung der Zeichnungen.

In den Zeichnungen zeigen
- Fig. 1: eine Ausführungsform einer Zahnform nach der Erfindung in einem Lichtofen;
- Fig. 2: eine Ansicht einer Ausführungsform eines Basiselements nach der Erfindung von oben;
- Fig. 3: das Basiselement aus Fig. 2 in einer Schnittdarstellung entlang der Schnittlinie III-III ohne Zahnformelement;
- Fig. 4: einen Teil einer weiteren Ausführungsform einer Zahnform nach der Erfindung;
- Fig. 5: eine nochmals weitere Ausführungsform einer Zahnform nach der Erfindung;
- Fig. 6: eine Ausführungsform eines Zahnformelementes nach der Erfindung;
- Fig. 7: eine nochmals weitere Ausführungsform einer Zahnform nach der Erfindung mit in eine Ausnehmung eingebrachtem lichthärtbarem Material;
- Fig. 8: das Zahnformelement aus Fig. 7 mit aufgesetztem oberen Zahnformelement gemäß der Erfindung;
- Fig. 9: die Zahnform aus Fig. 8, wobei das gehärtete lichthärtbare Material aus Fig. 3 teilweise abgenommen wurde und der entstehende Hohlraum mit einem weiteren lichthärtbaren Material gefüllt wurde;
- Fig. 10: ein als Abformelement ausgebildetes Zahnformelement gemäß der Erfindung;
- Fig. 11: das Abformelement aus Fig. 10 mit eingedrücktem, abzuformenden Zahn;
- Fig. 12: das zum Herstellen eines künstlichen Zahnes bereite Abformelement aus Fig. 11.

In den Zeichnungen sind gleiche oder gleichwirkende Elemente mit den selben Bezugszahlen bezeichnet. Soweit in der nachfolgenden Beschreibung auf obere bzw. untere Zahnformelemente oder Basiselemente Bezug genommen wird, ist "obere" bzw. "untere" nicht einschränkend auszulegen und dient nur der "anschaulicheren" Bezeichnung des betreffenden Elements.

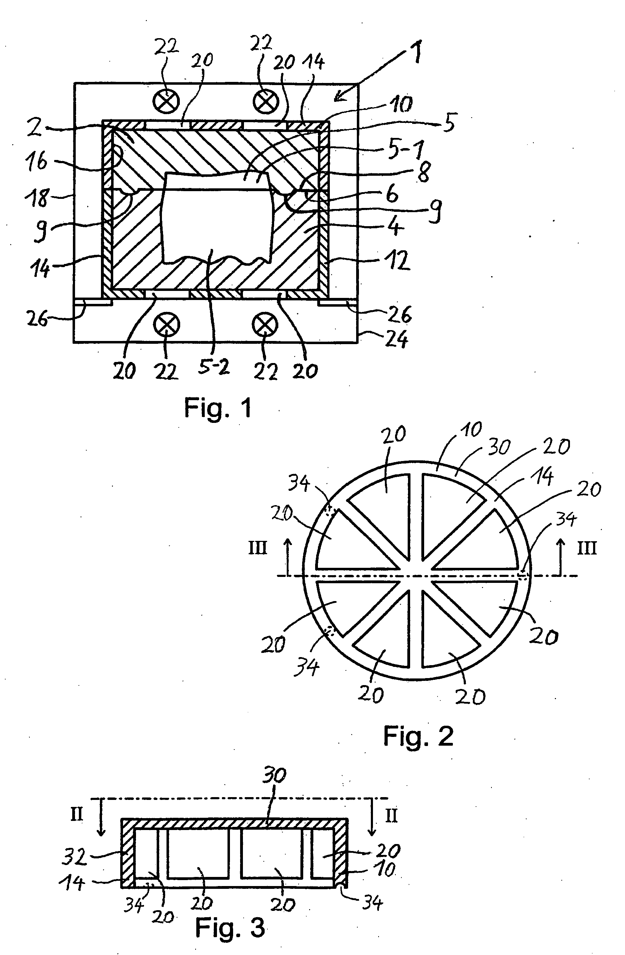

Die Fig. 1 zeigt eine Zahnform 1 mit zwei erfindungsgemäßen Zahnformelementen 2, 4 zum Herstellen eines künstlichen Zahnes aus lichthärtbarem Material, wobei die Zahnformelemente 2, 4 ausgebildet sind zum Härten des lichthärtbaren Materials, welches in einer von den beiden Zahnformelementen gebildeten Ausnehmung 5 angeordnet werden kann. Wie aus Fig. 1 ersichtlich weist jedes Zahnformelement 2, 4 einen entsprechenden Ausnehmungsabschnitt 5-1, 5-2 auf, wobei die Ausnehmungsabschnitte 5-1, 5-2 die Ausnehmung 5 bilden, die dem zu bildenden mindestens einen künstlichen Zahn entspricht. In diesem Sinne bildet die Ausnehmung 5 ein Negativ-Abbild des zu bildenden mindestens einen künstlichen Zahnes.

Die Fig. 1 zeigt die Zahnformelemente 2, 4 ohne in die Ausnehmung 5 eingebrachtes lichthärtbares Material. Die Zahnformelemente 3, 4 aus Fig. 1 sind aus einem lichtdurchlässigem Material, hier klares Silikon, gebildet. Die beiden Zahnformelemente 3, 4 bilden zusammen eine vollständige Zahnform, in welcher der künstliche Zahn, beispielsweise eine Krone, bildbar ist.

Trennflächen 6, 8, mit welchen die beiden Zahnformelemente aufeinander positioniert werden, sind vorzugsweise als im wesentlichen ebene Flächen ausgebildet, wie in Fig. 1 dargestellt. Die Trennflächen können ein Positioniermittel 9 aufweisen, durch welches eine Zahnformelement 2 relativ zu dem anderen Zahnformelement 4 definiert positionierbar ist. Das Positioniermittel 9 kann beispielsweise eine oder mehrere Erhebungen in dem einen Zahnformelement 2 aufweisen, die mit entsprechenden Vertiefungen in dem anderen Zahnformelement 4 zusammenpassen und eine korrekte Positionierung der Zahnformelemente 2, 4 relativ zueinander sicherstellen.

Die Trennflächen 6, 8 können jedoch jede beliebige andere Form oder Gestalt aufweisen.

Die Zahnformelemente 2, 4 sind jeweils in einem ihnen zugeordneten Basiselement 10, 12 angeordnet. Die Basiselemente 10, 12 bilden einen Teil der Zahnform 1. Die Basiselemente 10, 12 weisen jeweils eine Wandung 14 auf, die in der in Fig. 1 dargestellten Ausführungsform aus Metall, d. h. aus lichtundurchlässigem Material, gebildet ist. Jede Wandung weist eine dem zugeordneten Zahnformelement gegenüber liegende Innenseite 16 und eine dem jeweiligen Zahnformelement abgewandte Außenseite 18 auf. Die Basiselemente 10, 12 sind ausgebildet zum Bereitstellen von Licht auf der Innenseite 16 der Wandung 14, zum Härten des lichthärtbaren Materials in der von den Zahnformelementen 2, 4 gebildeten Ausnehmung 5.

In der in Fig. 1 dargestellten Ausführungsform ist die Wandung 14 teilweise für Licht durchlässig ausgebildet. Hierzu weist die Wandung 14 Durchbrüche 20 auf, zum Durchtritt von Licht von der Außenseite 18 zu der Innenseite 16 der Wandung. Das Licht zum Härten des lichthärtbaren Materials wird von einer Lichtquelle 22 bereitgestellt, die auf der Außenseite 18 der Wandung 14 angeordnet ist.

Die Lichtquelle 22 kann eines oder mehrere Leuchtmittel enthalten, beispielsweise vier Leuchtmittel wie in Fig. 1 dargestellt.

Fig. 1 zeigt ferner einen Lichtofen 24, in welchem die Zahnform 1 auf einer Auflage 26 anordenbar ist und welcher die Lichtquelle 22 enthält.

Bei einer Zahnform 1, die mindestens teilweise für Licht zum Härten von lichthärtbarem Material durchlässig ist, kann ein üblicher in der Zahntechnik verwendeter Lichtofen benutzt werden, welcher Licht zum Härten von lichthärtbarem Material bereitstellt.

Die Fig. 2 und Fig. 3 betreffen eine weitere Ausführungsform einer Zahnform 1. Diese Zahnform enthält zwei Zahnformelemente 2, 4, von denen nur das obere Zahnformelement 2, entsprechend dem Zahnformelement 2 der Fig. 1, dargestellt ist. Eine Decke 30 der Wandung 14 des oberen Basiselements 2 weist kreissegmentförmige Durchbrüche 20 auf, zum Durchtritt von Licht von der Außenseite der Wandung 14 zu der Innenseite 16 der Wandung 14. Die Seitenwand 32 des oberen Basiselements 10 weist rechteckförmige Durchbrüche 20 zum Durchtritt von Licht von der Außenseite 18 zu der Innenseite 16 der Seitenwand 32 auf, wie in Fig. 3 dargestellt.

Ebenfalls in den Fig. 2 und 3 dargestellt ist ein Positioniermittel 34, durch welches das obere Basiselement 10 bezüglich des unteren Basiselementes 12 definiert positionierbar ist. Diese definierte Positionierbarkeit ist vorteilhaft, da dadurch vermieden wird, dass ein Benutzer der Zahnform 1 die Basiselemente 10, 12 und dadurch die in den Basiselementen 10, 12 angeordneten Zahnformelemente 2, 4 falsch ausgerichtet aufeinander anordnet und dadurch die Qualität des in dieser nicht korrekt zusammengefügten Zahnform hergestellten künstlichen Zahnes vermindert oder den künstlichen Zahn völlig unbrauchbar macht. Das Positioniermittel 34 besteht in der in Fig. 2 und 3 dargestellten Ausführungsform aus drei Vertiefungen, die mit entsprechenden Erhebungen in dem unteren Basiselement 12 (nicht dargestellt) zusammenpassen und dadurch die Positionierung des oberen Basiselements 10 bezüglich des unteren Basiselements 12 in eindeutiger Weise sicherstellen.

Die Größe der Durchbrüche 20 kann dem Grad der Elastizität der Zahnformelemente 2, 4 angepasst sein. Bei Verwendung eines steiferen Materials für die Zahnformelemente 2, 4 können die Durchbrüche 20 größer gewählt werden, wohingegen für eine elastisches, weiches Material die Durchbrüche 20 kleiner gewählt werden müssen, um ein Verformen des betreffenden Zahnformelementes unter dem Druck des in der Ausnehmung 5 angeordneten lichthärtbaren Materials zu vermeiden.

Obwohl in den Fig. 2 und 3 nur das obere Basiselement 10 dargestellt ist, versteht es sich, dass das zugehörige untere Basiselement 12 in Funktion und/oder Form generell entsprechend dem oberen Basiselement 10 ausgebildet sein kann.

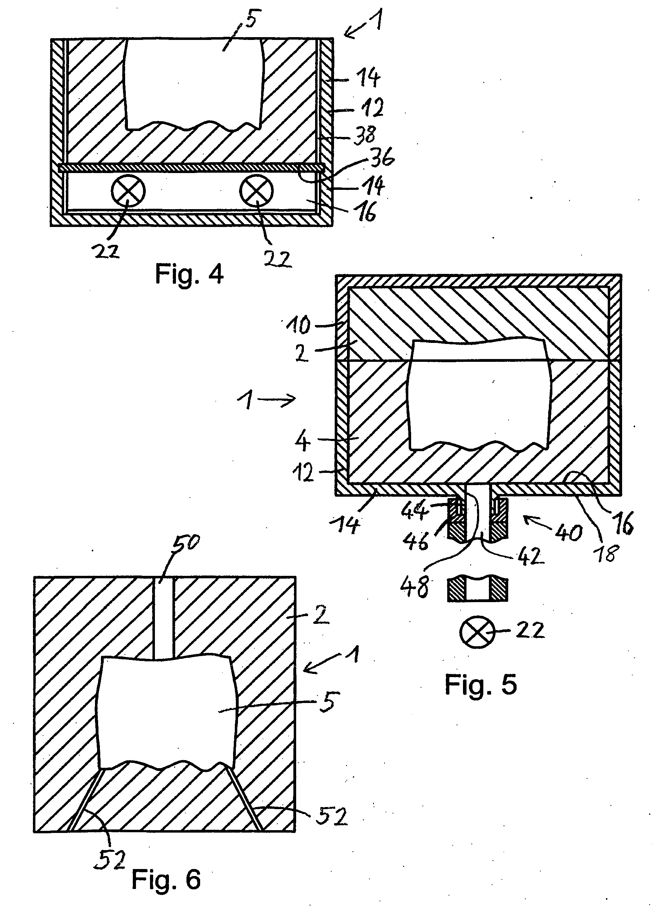

Die Fig. 4 zeigt eine weitere Ausführungsform eines Basiselements nach der Erfindung. Hierbei ist auf der Innenseite 16 der Wandung 14 eine Lichtquelle 22 angeordnet, von welcher Licht zum Härten des lichthärtbaren Materials abgebbar ist. Die Lichtquelle 22 kann eines oder mehrere Leuchtmittel aufweisen, beispielsweise zwei Leuchtmittel wie in Fig. 4 dargestellt. Die Anzahl und Anordnung der Leuchtmittel ist vorzugsweise an die Größe, die Form und die Anzahl der zu bildenden künstlichen Zähne, und damit an die Form und Größe der Ausnehmung 5 angepasst.

Der Lichtquelle 22 kann ein Schutzelement 36 zugeordnet sein, welches die Lichtquelle 22 vor Verschmutzung und/oder Beschädigung schützt. Das Schutzelement 36 kann beispielsweise durch eine Glasplatte oder eine Plexiglasplatte, oder ein beliebiges anderes lichtdurchlässiges Element, insbesondere durch ein Fensterelement gebildet sein, welches durchlässig ist für das Licht zum Härten des lichthärtbaren Materials in der Ausnehmung 5.

Das die in Fig. 4 dargestellte Ausführungsform eines Basiselements 12 weist eine Wandung 14 ohne Durchbrüche auf. Die Wandung 14 weist auf ihrer Innenseite 16 eine Spiegelschicht 38 auf, welche von der Lichtquelle 22 ausgesendetes Licht reflektiert, insbesondere in Richtung der Ausnehmung 5. Auf diese Weise wird die Effizienz der Lichtquelle 22 bezüglich des Härtens des lichthärtbaren Materials in der Ausnehmung 5 erhöht.

Die Fig. 5 zeigt eine weitere Ausführungsform eines Basiselements 12 nach der Erfindung, welches eine Lichtleiterkupplung 40 aufweist, die mit einem Lichtleiter 42 kuppelbar ist. Durch die Lichtleiterkupplung 40 ist ein von dem Lichtleiter abgegebenes Licht auf die Innenseite 16 der Wandung 14 bringbar.

In Fig. 5 ist beispielhaft nur eine einzige Lichtleiterkupplung 40 dargestellt. Es versteht sich jedoch, dass je nach Größe und Form des Basiselements 12 bzw. je nach Größe, Form und Anzahl der zu bildenden Zähne zwei oder mehr Lichtleiterkupplungen vorgesehen sein können.

Die Lichtleiterkupplungen können auf einer bestimmten Seite der Wandung angeordnet sein, oder sie können über die Wandung 14 verteilt angeordnet sein. Insbesondere kann jedes Basiselement mindestens eine Lichtleiterkupplung aufweisen. Die mindestens eine Lichtleiterkupplung kann bezüglich der Wandung 14 mittig, wie in Fig. 5 dargestellt angeordnet sein. Alternativ kann die Lichtleiterkupplung auch seitlich angeordnet sein, so dass der auf die Innenseite 16 der Wandung 14 eingekoppelte Lichtstrahl nicht das lichtleitende Material direkt trifft, sondern primär an diesem vorbei gerichtet wird. Auf diese Weise kann insbesondere unter Verwendung einer auf der Innenseite 16 mindestens abschnittsweise verspiegelten Wandung 14 eine gleichmäßige Verteilung des eingekoppelten Lichtes in dem mindestens einen Zahnformelement erreicht werden.

Die Lichtleiterkupplung 40 kann beispielsweise ein Gewinde 44 aufweisen, auf welches ein entsprechendes Gegenstück 46 des Lichtleiters 42 aufschraubbar ist, zur Bildung einer Schraubverbindung zwischen dem Basiselementes 12 und dem Lichtleiter 42. Innerhalb des Gewindes 44 erstreckt sich ein Durchbruch 48 von der Außenseite 18 bis zu der Innenseite 16 der Wandung 14. Anstelle einer Schraubverbindung kann jede andere Verbindung vorgesehen sein, beispielsweise eine Bajonett-, Schnapp- oder Steckverbindung.

Fig. 6 zeigt eine Ausführungsform eines Zahnformelementes 2, wobei die Ausnehmung 5 zum Bilden des mindestens einen künstlichen Zahnes von einem einzigen Zahnformelement 2 gebildet ist. Das Zahnformelement 2 in Fig. 6 weist einen Zufuhrkanal 50 auf, durch welchen lichthärtbares Material in die Ausnehmung 5 einbringbar ist. Ferner weist das Zahnformelement 2 der Fig. 6 zwei Überlaufkanäle 52 auf, über welche ein Überschuss eines in die Ausnehmung 5 eingebrachten lichthärtbaren Materials wieder austreten kann. Durch die Überlaufkanäle 52 wird eine vollständige Füllung der Ausnehmung 5 gewährleistet.

Dem Zahnformelement 2, wie es beispielsweise in Fig. 6 dargestellt ist, kann ein einziges Basiselement (nicht dargestellt) zugeordnet sein. Alternativ können dem Zahnformelement 2 zwei oder mehr Basiselemente zugeordnet sein.

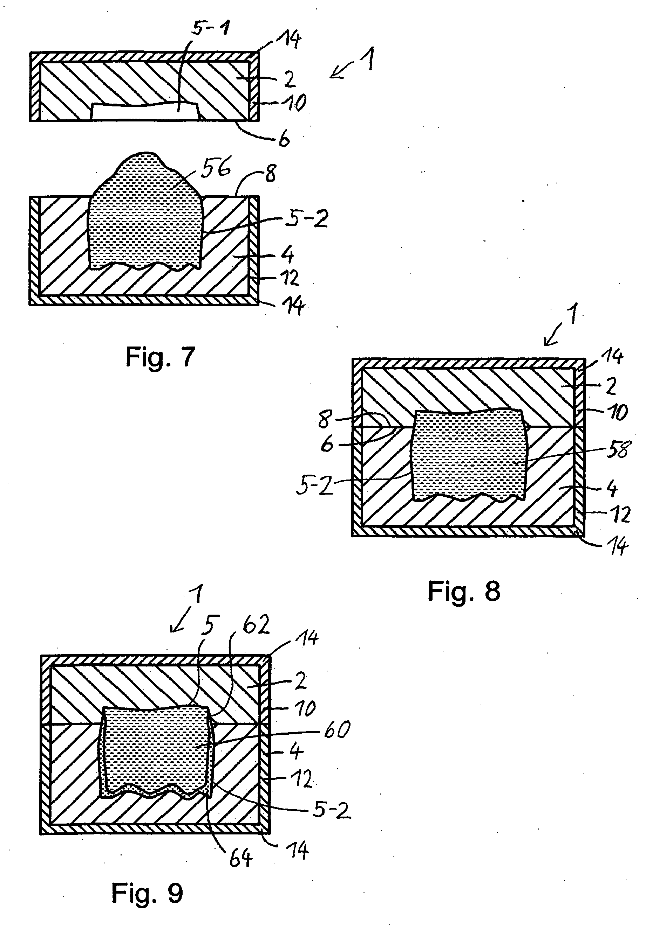

Die Fig. 7, 8 und 9 veranschaulichen ein bevorzugtes Verfahren zur Herstellung eines künstlichen Zahnes gemäß der Erfindung. Gemäß dieser Ausführungsform des Verfahrens wird eine Zahnform verwendet, bei welcher die dem mindestens einen zu bildenden Zahn entsprechende Ausnehmung 5 von zwei Zahnformelementen 2, 4 gebildet wird. Die Zahnformelemente 2, 4 weisen jeweils ein Basiselement 10, 12 auf. Die Basiselemente sind hier aus lichtdurchlässigem Kunststoff, beispielsweise Plexiglas, gebildet. Abweichend von der Darstellung in Fig. 7 kann das den Zahnhals bildende Zahnformelement 2 ausgebildet sein, um auf der Unterseite des künstlichen Zahnes eine Vertiefung zu erzeugen, wie dies üblicherweise bei einer Krone der Fall ist. Die Vertiefung entspricht in ihrer Form hierbei in bekannter Weise dem Zahnstumpf des Zahnes, der mit der Krone (dem künstlichen Zahn) überkront wird.

Vor dem Zusammenfügen der beiden Zahnformelemente 2,4 wird in eines der Zahnformelemente, beispielsweise das untere Zahnformelement 4, wie in Fig. 7 dargestellt, das lichthärtbare Material 56 eingebracht und anschließend das obere Zahnformelement 2 auf das untere Zahnformelement 4 aufgesetzt. Diese Konfiguration ist in Fig. 8 dargestellt. Alternativ kann auch in beide Zahnformelemente 2, 4 lichthärtbares Material eingebracht werden. Durch das anschließende Zusammenfügen der Zahnformelemente wird die Ausnehmung 5 mit dem lichthärtbaren Material 56 ausgefüllt und überschüssiges lichthärtbares Material wird zwischen den Trennflächen 6, 8 der Zahnformelemente 2 bzw. 4 herausgepresst. Falls ein Zahngerüst verblendet werden soll, wird das Zahngerüst mit dem lichthärtbaren Material in eines der Zahnformelemente eingebracht. Durch Beauschlagen des lichthärtbaren Materials in der Ausnehmung 5 mit Licht wird dieses lichthärtbare Material gehärtet.

Der auf diese Weise gebildete künstliche Zahn 58 weist zwar die gewünschte Form auf, erfüllt jedoch üblicherweise noch nicht die ästhetischen Anforderungen an einen künstlichen Zahn. Aus diesem Grund wird der künstliche Zahn vorzugsweise aus zwei oder mehr Schichten aufgebaut, wobei bei Anwendung eines erfindungsgemäßen Verfahrens in der Regel zwei Schichten ausreichen.

Zur Bildung einer weiteren Schicht werden die Zahnformelemente 2, 4 voneinander getrennt und von dem gehärteten lichthärtbaren Material wird ein Teil abgetragen, beispielsweise abgeschliffen. Auf diese Weise wird ein Zahnrohling erhalten, wie er in Fig. 4 mit der Bezugszahl 60 bezeichnet ist.

Es kann vorgesehen sein, dass ein Zahnformelement, beispielsweise das dem Zahnhals 62 zugeordnete Zahnformelement 2, so ausgebildet ist, dass es auf den in der Ausnehmung 5 gebildeten Zahn eine höhere Rückhaltekraft ausübt als das bzw. die übrigen Zahnformelemente 4, so dass bei einem Trennen der Zahnformelemente 2, 4 das bereits gehärtete lichthärtbare Material (Zahn 58) an dem dem Zahnhals 62 zugeordneten Zahnformelement 2 haften bleibt. Dies erleichtert die Handhabung und weitere Bearbeitung des bereits lichtgehärteten Materials.

Wie in Fig. 4 dargestellt, wird nach dem Bilden des Zahnrohlings 60 in die Ausnehmung 5 bzw. den Teil 5-2 der Ausnehmung, der von dem bzw. den übrigen Zahnformelementen 4 gebildet wird, ein weiteres lichthärtbares Material eingebracht und anschließend das dem Zahnhals 62 zugeordnete Zahnformelement 2 mit dem Zahnrohling mit den übrigen Zahnformelementen 4 zusammengefügt. Anschließend wird das weitere lichthärtbare Material 64 durch Beaufschlagung mit Licht gehärtet.

Das weitere lichthärtbare Material 64 wird vorzugsweise so ausgewählt, dass die Farbe, Opaleszenz und Trübung des resultierenden Zahnes dem entsprechenden natürlichen Zahn entspricht und sich unauffällig in das übrige Gebiss des Patienten einfügt.

Alternativ zu dem beschriebenen Verfahren kann der Zahnrohling 60 aus dem dem Zahnhals 62 zugeordneten Zahnformelement 4 herausgelöst werden und unabhängig von diesen Zahnformelement 4 in die von den übrigen Zahnformelementen 4 gebildete Ausnehmung 5-2 eingebracht werden.

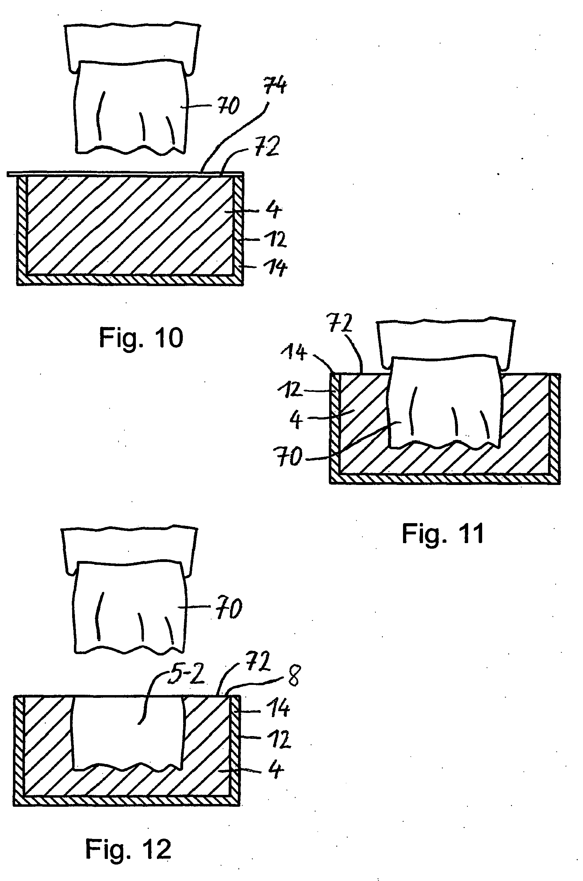

Die Fig. 10 und 11 zeigen eine Ausführungsform eines Zahnformelementes 4, welches in einem plastisch verformbaren Zustand ist. Ein solches Zahnformelement 4 ermöglicht das Abformen von mindestens einem Teil von mindestens einem Zahn 70 und dadurch Bilden einer Ausnehmung 5-2, in welche ein lichthärtbares Material einbringbar ist.

Es kann vorgesehen sein, dass ein Zahnformelement 4 zusammen mit einem Basiselement 12 vertrieben wird. Vorzugsweise ist das Basiselement 12 in diesem Fall ein Wegwerf-Element, das nach Herstellung des gewünschten künstlichen Zahnes weggeworfen oder recycelt wird. Für den Vertrieb des zum Abformen geeigneten Zahnformelementes 4 mit zugeordnetem Basiselement 12 ist die Oberfläche 72 des Zahnformelementes 4, in welche der abzuformende Zahn 70, welcher ein natürlicher Zahn oder ein Zahnmodell sein kann, eingedrückt wird, durch eine Schutzfolie 74 vor einem Austrocknen oder vor einer Reaktion mit der Umgebungsluft geschützt.

Nach dem Abziehen der Schutzfolie 74 wird das Zahnformelement 4 auf den abzuformenden Zahn 70 aufgedrückt, so dass sich in dem Zahnformmaterial 4 eine dem Zahn 70 entsprechende Ausnehmung 5-2 bildet (Fig. 11). In die Ausnehmung 5 kann nach dem Verfestigen des plastisch verformbaren Zahnformelementes 4 (Fig. 12) das lichthärtbare Material eingebracht werden, zum Bilden des künstlichen Zahnes. Die Oberfläche 72 des in Fig. 12 dargestellten Zahnformelementes 4 bildet eine oben beschriebene Tremfläche.

Die Erfindung ist nicht auf die in den Zeichnungen beispielhaft dargestellten Ausführungsformen der Fig. 1 bis 11 beschränkt. Die Erfindung ergibt sich vielmehr aus einer fachmännischen Gesamtbetrachtung der Ansprüche, der Beschreibungen, der beispielhaften Ausführungsformen und der nachfolgend erwähnten Varianten, die einem Fachmann Hinweise auf weitere mögliche Ausführungsformen geben sollen, ohne jedoch die Variationsmöglichkeiten auf diese Hinweise zu beschränken.

Abweichend von der Darstellung in den Zeichnungen kann jedem Basiselement mehr als ein Zahnformelement zugeordnet sein.

Die von den Zahnformelementen gebildete Ausnehmung kann mehreren Zähnen entsprechen. In den Zeichnungen sind Basiselemente und Zahnformelemente dargestellt, die einen rechteckförmigen Querschnitt aufweisen. Abweichend hiervon sind beliebige andere Querschnittsflächen möglich; insbesondere kann durch die Querschnittsform die Lichtverteilung in dem Basiselement verändert werden und den Anforderungen des jeweiligen zu bildenden künstlichen Zahnes angepasst werden.

Anstelle eines lichtundurchlässigen Materials für die Basiselemente können diese aus lichtdurchlässigem Material gebildet sein, beispielsweise aus lichtdurchlässigem Kunststoff.

Das Material des mindestes einen Zahnformelementes und/oder die Abmessungen des mindestens einen Zahnformelementes bezüglich der von ihm gebildeten Ausnehmung kann gemäß einer Ausführungsform der Erfindung so bemessen sein, dass das mindestens eine Zahnformelement als Lichtleiter wirkt. Dadurch wird ein auf der Innenseite der Wandung bereitgestelltes Licht in dem Zahnformelement verteilt und es kann auch bei Verwendung von nur wenigen Lichtquellen/Leuchtmitteln eine allseitige Beaufschlagung des lichthärtbaren Materials mit Licht erzielt werden.

Das Material und/oder die Form eines oder mehrerer Basiselemente kann so gewählt sein, dass das Basiselement einen Lichtleiter bildet, wobei ein durch einen Lichteinkoppelabschnitt des Basiselements in das Basiselement eingebrachtes Licht sich in dem Basiselement ausbreitet. Auf diese Weise kann mit wenigen Lichtquellen/Leuchtmitteln eine allseitige Beaufschlagung des lichthärtbaren Materials mit Licht erzielt werden.

Die Erfindung umfasst insbesondere die Merkmalskombinationen der folgenden Ausführungsformen:
1. Ausführungsform: Zahnformelement zum Herstellen von mindestens einem künstlichen Zahn aus lichthärtbarem Material,
   wobei das Zahnformelement ausgebildet ist zum Härten des lichthärtbaren Materials in dem Zahnformelement.
2. Ausführungsform: Zahnformelement nach Ausführungsform 1,
   dadurch gekennzeichnet,
   dass es mindestens teilweise aus einem lichtdurchlässigen Material gebildet ist.
3. Ausführungsform: Zahnformelement nach Ausführungsform 1 oder 2,
   dadurch gekennzeichnet,
   dass es in einem plastisch verformbaren Zustand ist, zum Abformen von mindestens einem Teil von mindestens einem Zahn und dadurch Bilden einer Ausnehmung, in welche ein lichthärtbares Material einbringbar ist.
4. Ausführungsform: Zahnformelement nach einer der Ausführungsformen 1 oder 2,
   dadurch gekennzeichnet,
   dass es eine Ausnehmung aufweist, welche mindestens einem Teil von mindestens einem Zahn entspricht und in welcher mindestens ein künstlicher Zahn bildbar ist.
5. Ausführungsform: Zahnformelement nach Ausführungsform 4,
   dadurch gekennzeichnet,
   dass es mindestens einen Kanal oder einen Teil von mindestens einem Kanal aufweist zwischen der Ausnehmung und einer äußeren Oberfläche des Zahnformelementes.
6. Ausführungsform: Zahnformelement nach einem der vorhergehenden Ansprüche,
   dadurch gekennzeichnet,
   dass das lichtdurchlässige Material für ein Härte-Licht, welches zum Lichthärten eines lichthärtbaren Materials geeignet ist, durchlässig ist.
7. Ausführungsform: Zahnformelement nach einem der vorhergehenden Ansprüche,
   dadurch gekennzeichnet,
   dass das lichtdurchlässige Material klares Silikon ist.
8. Ausführungsform: Zahnformelement nach einem der vorhergehenden Ansprüche,
   dadurch gekennzeichnet,
   dass es ein Positioniermittel aufweist, durch welches das Zahnformelement bezüglich eines weiteren Zahnformelements definiert positionierbar ist.
9. Ausführungsform: Verwendung eines lichtdurchlässigen Materials als Zahnformmaterial, zur Herstellung eines lichtdurchlässigen Zahnformelementes insbesondere nach einer der Ausführungsformen 1 bis 8.
10. Ausführungsform: Basiselement einer Zahnform mit einer Wandung, welche eine Innenseite und eine Außenseite aufweist;
   wobei auf der Innenseite der Wandung mindestens ein Zahnformelement, in welchem ein mindestens ein künstlicher Zahn aus lichthärtbarem Material bildbar ist, angeordnet oder anordenbar ist; und wobei das Basiselement ausgebildet ist zum Bereitstellen von Licht auf der Innenseite der Wandung, zum Härten des lichthärtbaren Materials.
11. Ausführungsform: Basiselement nach Ausführungsform 10,
   dadurch gekennzeichnet,
   dass die Wandung mindestens teilweise für Licht durchlässig ist.
12. Ausführungsform: Basiselement nach Ausführungsform 11,
   dadurch gekennzeichnet,
   dass die Wandung mindestens einen Durchbruch aufweist, zum Durchtritt von Licht von der Außenseite zu der Innenseite.
13. Ausführungsform: Basiselement nach Ausführungsform 10 oder 11,
   dadurch gekennzeichnet,
   das die Wandung mindestens teilweise durch ein lichtdurchlässiges Material gebildet ist, welches Licht von der Außenseite zu der Innenseite durchlässt.
14. Ausführungsform: Basiselement nach Ausführungsform 13,
   dadurch gekennzeichnet,
   dass das lichtdurchlässige Material für Härte-Licht, welches zum Lichthärten eines lichthärtbaren Materials geeignet ist, durchlässig ist.
15. Ausführungsform: Basiselement nach einer der Ausführungsformen 10 bis 14, gekennzeichnet durch
   mindestens eine Lichtleiter-Kupplung, welche mit einem Lichtleiter kuppelbar ist, und durch welche von dem Lichtleiter abgegebenes Licht auf die Innenseite bringbar ist.
16. Ausführungsform: Basiselement nach einer der Ausführungsformen 10 bis 15,
   dadurch gekennzeichnet,
   dass es auf der Innenseite der Wandung mindestens eine Lichtquelle aufweist, von welcher das Licht abgebbar ist.
17. Ausführungsform: Basiselement nach einer der Ausführungsformen 12, 15, 16,
   dadurch gekennzeichnet,
   dass die Wandung aus lichtundurchlässigem Material gebildet ist.
18. Ausführungsform: Basiselement nach einer der Ausführungsformen 10 bis 17,
   dadurch gekennzeichnet,
   dass es auf der Innenseite verspiegelte Innenabschnitte aufweist, welche das Licht auf die Innenseite zurückreflektieren.
19. Ausführungsform: Basiselement nach einer der Ausführungsformen 10 bis 18,
   dadurch gekennzeichnet,
   dass es ein Positioniermittel aufweist, durch welches das Basiselement bezüglich eines weiteren Basiselements definiert positionierbar ist.
20. Ausführungsform: Basiselement nach einer der Ausführungsformen 10 bis 19,
   dadurch gekennzeichnet,
   dass es mindestens ein Zahnformelement nach einer der Ausführungsformen 1 bis 8 enthält.
21. Ausführungsform: Basiselement nach einer der Ausführungsformen 10 bis 20,
   dadurch gekennzeichnet,
   dass es als mechanische Stütze für das mindestens eine Zahnformelement ausgebildet ist.
22. Ausführungsform: Verfahren zum Herstellen mindestens eines künstlichen Zahnes, aufweisend die Schritte:
   - Einbringen eines lichthärtbaren Materials in eine dem mindestens einen Zahn entsprechende Ausnehmung, die durch mindestens ein Zahnformelement gebildet wird;
   - Beaufschlagen des lichthärtbaren Materials mit Licht zum Härten des lichthärtbaren Materials.
23. Ausführungsform: Verfahren nach Ausführungsform 22,
   wobei vor dem Härten des lichthärtbaren Materials ein Zahnrohling oder ein Zahngerüst in die dem mindestens einen Zahn entsprechende Ausnehmung eingebracht wird.
24. Ausführungsform: Verfahren nach Ausführungsform 22 oder 23,
   wobei nach dem Härten des lichthärtbaren Materials die folgenden Schritte ausgeführt werden:
   - Abtragen eines Teils des gehärteten lichthärtbaren Materials und dadurch Bilden eines Zahnrohlings;
   - Wieder Einbringen des Zahnrohlings und eines lichthärtbaren Materials in die dem Zahn entsprechende Ausnehmung;
   - Beaufschlagen des lichthärtbaren Materials mit Licht zum Härten des lichthärtbaren Materials.
25. Ausführungsform: Verfahren nach Ausführungsform 24,
   wobei die Schritte gemäß Ausführungsform 24 mindestens ein weiteres Mal ausgeführt werden.
26. Ausführungsform: Verfahren nach einer der Ausführungsformen 22 bis 25,
   wobei vor dem Einbringen des lichthärtbaren Materials in die Ausnehmung mindestens zwei Zahnformelemente zusammengefügt werden, zum Bilden der dem Zahn entsprechenden Ausnehmung.
27. Ausführungsform: Verfahren nach einer der Ausführungsformen 22 bis 25,
   wobei die Ausnehmung durch mindestens zwei Zahnformelemente gebildet wird und vor dem Zusammenfügen der mindestens zwei Zahnformelemente zum Bilden der dem Zahn entsprechenden Ausnehmung das lichthärtbare Material in mindestens eines der Zahnformelemente eingebracht wird und die mindestens zwei Zahnformelemente anschließend zusammengefügt werden.
28. Ausführungsform: Verfahren nach Ausführungsform 27,
   wobei ein Überschuß an lichthärtbarem Material in mindestens eines der Zahnformelemente eingebracht wird und die mindestens zwei Zahnformelemente mit Druck zusammengefügt werden, um alle Hohlräume in der durch das Zusammenfügen gebildeten Ausnehmung auszufüllen und überschüssiges Material aus der Ausnehmung herauszupressen.
29. Ausführungsform: Verfahren nach einer der Ausführungsformen 22 bis 28,
   dadurch gekennzeichnet,
   dass gemäß einer der Ausführungsformen 1 bis 9 ausgebildete Zahnformelemente verwendet werden.
30. Ausführungsform: Verfahren nach einer der Ausführungsformen 22 bis 29,
   dadurch gekennzeichnet,
   dass jeweils in einem gemäß einer der Ausführungsformen 10 bis 21 ausgebildeten Basiselement angeordnete Zahnformelemente verwendet werden.
31. Ausführungsform: Lichthärtbares Zahnmaterial, welches angepasst ist für eine Verwendung in einem Zahnformelement gemäß einer der Ausführungsformen 1 bis 8.
32. Ausführungsform: Lichthärtbares Zahnmaterial nach Ausführungsform 31,
   dadurch gekennzeichnet,
   dass es angepasst ist für die Verwendung in einem Verfahren gemäß einer der Ausführungsformen 22 bis 29 ausgebildet ist.
33. Ausführungsform: Zahnform enthaltend mindestens ein Zahnformelement nach einer der Ausführungsformen 1 bis 8.
34. Ausführungsform: Zahnform nach Ausführungsform 33, enthaltend mindestens ein Basiselement nach einer der Ausführungsformen 10 bis 21.

## Patentansprüche

1. Zahnformelement zum Herstellen von mindestens einem künstlichen Zahn aus lichthärtbarem Material,
wobei das Zahnformelement ausgebildet ist zum Härten des lichthärtbaren Materials in dem Zahnformelement.

2. Zahnformelement nach Anspruch 1,
**dadurch gekennzeichnet,**
**dass** es mindestens teilweise aus einem lichtdurchlässigen Material gebildet ist.

3. Zahnformelement nach einem der Ansprüche 1 oder 2,
**dadurch gekennzeichnet,**
**dass** es eine Ausnehmung aufweist, welche mindestens einem Teil von mindestens einem Zahn entspricht und in welcher mindestens ein künstlicher Zahn bildbar ist.

4. Zahnformelement nach Anspruch 3,
**dadurch gekennzeichnet,**
**dass** es mindestens einen Kanal oder einen Teil von mindestens einem Kanal aufweist zwischen der Ausnehmung und einer äußeren Oberfläche des Zahnformelementes.

5. Basiselement einer Zahnform mit einer Wandung, welche eine Innenseite und eine Außenseite aufweist;
wobei auf der Innenseite der Wandung mindestens ein Zahnformelement, in welchem ein mindestens ein künstlicher Zahn aus lichthärtbarem Material bildbar ist, angeordnet oder anordenbar ist; und wobei das Basiselement ausgebildet ist zum Bereitstellen von Licht auf der Innenseite der Wandung, zum Härten des lichthärtbaren Materials.

6. Basiselement nach Anspruch 5,
**dadurch gekennzeichnet,**
**dass** es mindestens ein Zahnformelement nach einem der Ansprüche 1 bis 4 enthält.

7. Verfahren zum Herstellen mindestens eines künstlichen Zahnes, aufweisend die Schritte:
- Einbringen eines lichthärtbaren Materials in eine dem mindestens einen Zahn entsprechende Ausnehmung, die durch mindestens ein Zahnformelement gebildet wird;
- Beaufschlagen des lichthärtbaren Materials mit Licht zum Härten des lichthärtbaren Materials.

8. Verfahren nach Anspruch 7,
wobei vor dem Härten des lichthärtbaren Materials ein Zahnrohling oder ein Zahngerüst in die dem mindestens einen Zahn entsprechende Ausnehmung eingebracht wird.

9. Verfahren nach Anspruch 7 oder 8,
wobei nach dem Härten des lichthärtbaren Materials die folgenden Schritte ausgeführt werden:
- Abtragen eines Teils des gehärteten lichthärtbaren Materials und **dadurch** Bilden eines Zahnrohlings;
- Wieder Einbringen des Zahnrohlings und eines lichthärtbaren Materials in die dem Zahn entsprechende Ausnehmung;
- Beaufschlagen des lichthärtbaren Materials mit Licht zum Härten des lichthärtbaren Materials.

10. Zahnform enthaltend mindestens ein Zahnformelement nach einem der Ansprüche 1 bis 4.
